(19) Europäisches Patentamt
European Patent Office
Office européen des brevets

(11) **EP 4 579 844 A1**

(12) **EUROPEAN PATENT APPLICATION**
published in accordance with Art. 153(4) EPC


(43) Date of publication:
**02.07.2025 Bulletin 2025/27**

(21) Application number: **23868281.9**

(22) Date of filing: **22.09.2023**

(51) International Patent Classification (IPC):
***H01M 10/056*** *(2010.01)* ***H01B 1/06*** *(2006.01)*
***H01B 1/08*** *(2006.01)* ***H01B 1/10*** *(2006.01)*
***H01G 11/56*** *(2013.01)* ***H01M 10/052*** *(2010.01)*
***H01M 10/054*** *(2010.01)* ***H01M 10/0562*** *(2010.01)*
***H01M 10/0565*** *(2010.01)* ***H01M 10/0569*** *(2010.01)*

(52) Cooperative Patent Classification (CPC):
**H01B 1/06; H01B 1/08; H01B 1/10; H01G 11/56; H01M 10/052; H01M 10/054; H01M 10/056; H01M 10/0562; H01M 10/0565; H01M 10/0569;**
Y02E 60/10

(86) International application number:
**PCT/JP2023/034519**

(87) International publication number:
**WO 2024/063160 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 JP 2022151824**



(71) Applicants:
- **Sumitomo Chemical Company, Limited**
**Tokyo 103-6020 (JP)**
- **Kyoto University**
**Kyoto-shi, Kyoto 606-8501 (JP)**

(72) Inventors:
- **SUWA Koki**
**Niihama-shi, Ehime 792-8521 (JP)**
- **NAKAJIMA Hideto**
**Niihama-shi, Ehime 792-8521 (JP)**
- **OUCHI Makoto**
**Kyoto-shi, Kyoto 606-8501 (JP)**

(74) Representative: **Vossius & Partner Patentanwälte Rechtsanwälte mbB**
**Siebertstrasse 3**
**81675 München (DE)**


(54) **ELECTROLYTE COMPOSITION, ELECTROLYTE, AND BATTERY**


(57) An electrolyte composition contains an ion conductive inorganic solid electrolyte, a polymer having an ability to preferentially conduct metal ions, and an organic solvent, in which the electrolyte composition satisfies at least one of the following conditions: (1) a content of the ion conductive inorganic solid electrolyte is 50 mass% or more with respect to a total amount of the electrolyte composition; and (2) a content of the ion conductive inorganic solid electrolyte is 15 vol% or more with respect to the total amount of the electrolyte composition.


*Fig.1*

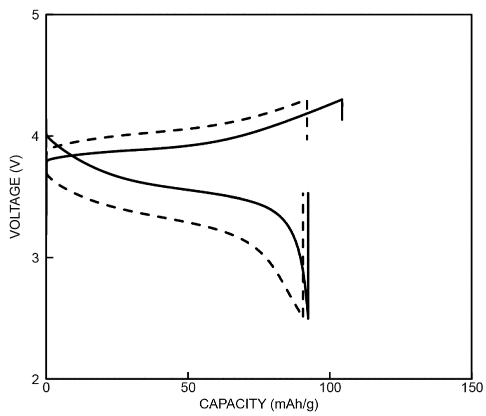


EP 4 579 844 A1

## Description

### Technical Field

The present disclosure relates to an electrolyte composition, an electrolyte, and a battery.

### Background Art

Batteries such as lithium ion batteries that perform charge and discharge in accordance with movement of metal ions between a positive electrode and a negative electrode are actively studied because of their high capacity. As an electrolyte for a lithium ion battery or the like, a solution of a lithium salt containing an organic solvent or an ionic liquid is known, and a solid electrolyte has been studied from the viewpoint of safety and processability (Patent Literatures 1 and 2 and Non Patent Literature 1). As the solid electrolyte, various kinds of compounds such as an oxide-based solid electrolyte and a sulfide-based solid electrolyte are known.

### Citation List

### Patent Literature

Patent Literature 1: Chinese Patent Application Laid-Open Publication No. 112448100
Patent Literature 2: Chinese Patent Application Laid-Open Publication No. 110247111

### Non Patent Literature

Non Patent Literature 1: Journal of The Electrochemical Society, 2020, 167, 070559.

### Summary of Invention

### Technical Problem

Here, a solid electrolyte is excellent in ionic conductivity and safety, but has a problem in that processability is difficult due to its rigidity, and interface resistance is also high. Therefore, for example, as described in Patent Literatures 1 and 2 and Non Patent Literature 1, studies on imparting flexibility to a solid electrolyte by complexing with a flexible polymer material have been conducted. However, as a result of intensive studies by the present inventors, it was found that there was a problem in that the transport number of metal ions was significantly reduced when complexing with a conventional polymer material.

The present disclosure has been made in view of the above-described problems, and an object of the present disclosure is to provide an electrolyte composition excellent in a transport number of metal ions, an electrolyte, and a battery including the same.

### Solution to Problem

The present disclosure includes the following exemplary embodiments [1] to [10].

[1] An electrolyte composition containing: an ion conductive inorganic solid electrolyte; a polymer having an ability to preferentially conduct metal ions; and an organic solvent, in which the electrolyte composition satisfies at least one of the following conditions: (1) a content of the ion conductive inorganic solid electrolyte is 50 mass% or more with respect to a total amount of the electrolyte composition; and (2) a content of the ion conductive inorganic solid electrolyte is 15 vol% or more with respect to the total amount of the electrolyte composition.
[2] The electrolyte composition according to [1], in which the ion conductive inorganic solid electrolyte is an oxide, a sulfide, a hydride, or a halide including at least one of an alkali metal element and an alkaline earth metal.
[3] The electrolyte composition according to [2], in which the ion conductive inorganic solid electrolyte is a perovskite-type oxide, a NASICON-type oxide, a LISICON-type oxide, or a garnet-type oxide.
[4] The electrolyte composition according to any one of [1] to [3], in which the polymer contains at least one of an anionic functional group having a metal ion as a counter cation and a functional group having an anion scavenging ability.

[5] The electrolyte composition according to any one of [1] to [4], in which a transport number of metal ions is 0.4 or more.

[6] The electrolyte composition according to any one of [1] to [5], in which an oxidation potential is 4.0 V or more with respect to $Li/Li^+$.

[7] An electrolyte composition, in which the electrolyte composition has a dynamic hardness DH of $10^3$ $N/mm^2$ or less as calculated from the following formula using a test result by a nanoindenter at 25°C,

$$DH = \alpha \times F/h^2 \times 10^3$$

$$\alpha = 3.8584$$

[8] The electrolyte composition according to any one of [1] to [6], in which the electrolyte composition has a dynamic hardness DH of $10^3$ $N/mm^2$ or less as calculated from the following formula using a test result by a nanoindenter at 25°C,

$$DH = \alpha \times F/h^2 \times 10^3$$

$$\alpha = 3.8584$$

[9] An electrolyte containing the electrolyte composition according to any one of [1] to [8].

[10] A battery containing the electrolyte composition according to any one of [1] to [8].

## Advantageous Effects of Invention

According to the present disclosure, it is possible to provide an electrolyte composition excellent in a transport number of metal ions, an electrolyte, and a battery including the same.

## Brief Description of Drawings

FIG. 1 is a result of a charge-discharge test of Example 2.

FIG. 2 is a result of a charge-discharge test of Comparative Example 4.

FIG. 3 is a differential capacity curve of Example 2.

FIG. 4 is a differential capacity curve of Comparative Example 4.

## Description of Embodiments

An electrolyte composition of the present embodiment contains an ion conductive inorganic solid electrolyte, a polymer having an ability to preferentially conduct metal ions, and an organic solvent, in which the electrolyte composition satisfies at least one of the following conditions:

(1) a content of the ion conductive inorganic solid electrolyte is 50 mass% or more with respect to a total amount of the electrolyte composition; and

(2) a content of the ion conductive inorganic solid electrolyte is 15 vol% or more with respect to the total amount of the electrolyte composition.

[Ion Conductive Inorganic Solid Electrolyte]

The ion conductive inorganic solid electrolyte is not particularly limited, and may be an oxide (oxide-based solid electrolyte), a sulfide (sulfide-based solid electrolyte), a hydride (hydride-based solid electrolyte), a halide (halide-based solid electrolyte), or the like. The ion conductive inorganic solid electrolyte may contain at least one of an alkali metal element and an alkaline earth metal element, and may contain an alkali metal element.

(Oxide-based Solid Electrolyte)

Examples of the oxide-based solid electrolyte include an oxide such as perovskite-type oxide, NASICON-type oxide, LISICON-type oxide, or garnet-type oxide, and an oxide obtained by doping the oxide with other cations or anions.

Examples of the perovskite-type oxide include Li-La-Ti-based oxide such as $Li_aLa_{1-a}TiO_3$ ($0 < a < 1$), Li-La-Ta-based oxide such as $Li_bLa_{1-b}TaO_3$ ($0 < b < 1$), and Li-La-Nb-based oxide such as $Li_cLa_{1-c}NbO_3$ ($0 < c < 1$).

Examples of the NASICON-type oxide include $Li_{1+d}Al_dTi_{2-d}(PO_4)_3$ ($0 \leq d \leq 1$). The NASICON-type oxide is an oxide represented by $Li_mM^1_nM^2_oP_pO_q$ (in the formula, $M^1$ is one or more elements selected from the group consisting of B, Al, Ga, In, C, Si, Ge, Sn, Sb, and Se, $M^2$ represents one or more elements selected from the group consisting of Ti, Zr, Ge, In, Ga, Sn, and Al, and m, n, o, p, and q are arbitrary positive numbers), and examples thereof include $Li_{1+x+y}Al_x(Ti,Ge)_{2-x}Si_yP_{3-y}O_{12}$ ($0 < x < 2$, $0 < y < 3$) (LATP).

Examples of the LISICON-type oxide include an oxide represented by $Li_4M^3O_4$-$Li_3M^4O_4$ ($M^3$ is one or more elements selected from the group consisting of Si, Ge, and Ti, and $M^4$ is one or more elements selected from the group consisting of P, As, and V).

Examples of the garnet-type oxide include Li-La-Zr-based oxide such as $Li_7La_3Zr_2O_{12}$ (LLZ) or $Li_{7-a2}La_3Zr_{2-a2}Ta_{a2}O_{12}$ (LLZT, $0 < a2 < 1$, $0.1 < a2 < 0.8$, $0.2 < a2 < 0.6$).

The oxide-based solid electrolyte may be a crystalline material or an amorphous material.

Examples of the oxide-based solid electrolyte include $Li_{6.6}La_3Zr_{1.6}Ta_{0.4}O_{12}$ and $Li_{0.33}La_{0.55}TiO_3$.

(Sulfide-based Solid Electrolyte)

Examples of the sulfide-based solid electrolyte include a $Li_2S$-$P_2S_5$-based compound, a $Li_2S$-$SiS_2$-based compound, a $Li_2S$-$GeS_2$-based compound, a $Li_2S$-$B_2S_3$-based compound, a $Li_2S$-$P_2S_3$-based compound, LiI-$Si_2S$-$P_2S_5$, LiI-$Li_2S$-$P_2O_5$, LiI-$Li_3PO_4$-$P_2S_5$, and $Li_{10}GeP_2S_{12}$.

Note that, in the present specification, the expression "-based compound" indicating a sulfide-based solid electrolyte is used as a generic term for solid electrolytes mainly containing raw materials such as "$Li_2S$" and "$P_2S_5$" described before "-based compound". For example, the $Li_2S$-$P_2S_5$-based compound includes a solid electrolyte containing $Li_2S$ and $P_2S_5$ and further containing other raw materials. In addition, the $Li_2S$-$P_2S_5$-based compound also includes a solid electrolyte in which a mixing ratio of $Li_2S$ and $P_2S_5$ is different.

Examples of the $Li_2S$-$P_2S_5$-based compound include $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, and $Li_2S$-$P_2S_5$-$Z_mS_n$ (m and n are positive numbers, and Z is Ge, Zn or Ga).

Examples of the $Li_2S$-$SiS_2$-based compound include $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$SiS_2$-$Li_3PO_4$, $Li_2S$-$SiS_2$-$Li_2SO_4$, and $Li_2S$-$SiS_2$-$Li_xMO_y$ (x and y are positive numbers, and M is P, Si, Ge, B, Al, Ga, or In).

Examples of the $Li_2S$-$GeS_2$-based compound include $Li_2S$-$GeS_2$ and $Li_2S$-$GeS_2$-$P_2S_5$.

The sulfide-based solid electrolyte may be a crystalline material or an amorphous material.

(Hydride-based Solid Electrolyte)

Examples of the hydride-based solid electrolyte material include $LiBH_4$, $LiBH_4$-3KI, $LiBH_4$-$PI_2$, $LiBH_4$-$P_2S_5$, $LiBH_4$-$LiNH_2$, $3LiBH_4$-LiI, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$.

(Halide-based Solid Electrolyte)

Examples of the halide solid electrolyte include a compound containing Li, a metal element, and a halogen element.

The halide-based solid electrolyte may be a crystalline material or an amorphous material.

Examples of the ion conductive inorganic solid electrolyte include compounds in which a part or all of Li of the compounds listed as specific examples of the oxide-based solid electrolyte, the sulfide-based solid electrolyte, the hydride-based solid electrolyte, or the halide-based solid electrolyte is substituted with Na, K, Rb, or Cs.

A content of the ion conductive inorganic solid electrolyte may be 50 mass% or more, 55 mass% or more, 60 mass% or more, 65 mass% or more, or 70 mass% or more, with respect to the total amount of the electrolyte composition. In addition, the content of the ion conductive inorganic solid electrolyte may be 95 mass% or less, 90 mass% or less, or 85 mass% or less, with respect to the total amount of the electrolyte composition. In addition, the content of the ion conductive inorganic solid electrolyte may be 50 to 95 mass%, 55 to 90 mass%, or 60 to 85 mass%, with respect to the total amount of the electrolyte composition.

The content of the ion conductive inorganic solid electrolyte may be 15 vol% or more, 25 vol% or more, 35 vol% or more, 40 vol% or more, 45 vol% or more, or 50 vol% or more, with respect to the total amount of the electrolyte composition.

In addition, the content of the ion conductive inorganic solid electrolyte may be 90 vol% or less, 80 vol% or less, 70 vol% or less, or 60 vol% or less, with respect to the total amount of the electrolyte composition. In addition, the content of the ion conductive inorganic solid electrolyte may be 15 to 90 vol%, 25 to 80 vol%, or 35 to 60 vol%, with respect to the total amount of the electrolyte composition. Note that, in the present specification, unless otherwise specified, vol% is calculated based on the volume of each component contained in the electrolyte composition before mixing, and may be a value obtained by dividing a mass ratio of each component by a density when the mass ratio of each component contained in the electrolyte composition is known.

The ion conductive inorganic solid electrolyte may be an electrolyte in which a particle surface is treated. Specific examples of the treatment include a treatment of removing a surface non-conductive layer with an acid, and a treatment of forming a covalent bond with an atom. The acid is not particularly limited, and examples thereof include hydrochloric acid, nitric acid, and phosphoric acid.

[Polymer Having Ability to Preferentially Conduct Metal Ions]

As the polymer (hereinafter, also simply referred to as a polymer) having the ability to preferentially conduct metal ions, for example, when a transport number of metal ions is measured for at least one of the following compositions (A) and (B) at room temperature (25°C), the transport number of metal ions may be 0.4 or more, 0.5 or more, 0.6 or more, or 0.7 or more.

Composition (A) containing 33 mass% of the polymer and 67 mass% of a nonionic plasticizer
Composition (B) containing 31.9 mass% of the polymer and the remaining total amount of a metal salt and a nonionic plasticizer, and having a metal ion concentration of 0.3 mol/L

When the polymer contains an anionic functional group, the metal ion contained in the composition may be a counter cation of the anionic functional group, or may be added as a metal salt. The polymer having the ability to preferentially conduct metal ions may be a polymer having an ability to preferentially conduct alkali metal ions. Examples of the nonionic plasticizer include at least one of an organic solvent and other resins such as a fluorine-based resin. The organic solvent may be an aprotic solvent. The aprotic solvent may be at least one selected from the group consisting of a carbonate-based solvent, a fluorine-based solvent, and an ether-based solvent. The fluorine-based resin is preferably a resin having a carbon chain as a main chain. The carbon chain may be formed by radical polymerization of an ethylenically unsaturated group. The fluorine-based resin may be poly(vinylidene fluoride-co-hexafluoropropylene) (PVDF-HFP). Specific examples of the organic solvent may be specific examples of an organic solvent contained in an electrolyte composition described below. The organic solvent may be a mixed solvent containing ethylene carbonate and propylene carbonate in a volume ratio of 1:1.

A concentration of the metal ions may be prepared by adding a metal salt. For example, when the metal salt is an alkali metal salt, the alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3), where M is the alkali metal. When the polymer contains a structural unit (A), M may be the same alkali metal element as the alkali metal element of the structural unit (A).

Examples of the polymer having the ability to preferentially conduct metal ions include a polymer containing at least one of an anionic functional group having a metal ion as a counter cation (also referred to as a functional group (A)) and a functional group having an anion scavenging ability (also referred to as a functional group (B)). A structure of the polymer is not particularly limited, and examples thereof include a structure having a carbon chain as a main chain, and the carbon chain may be formed by radical addition polymerization of a monomer having an ethylenically unsaturated group.

The metal ion, which is a counter cation of the functional group (A), may be at least one of an alkali metal ion and an alkaline earth metal ion, and may be an alkali metal ion. Examples of the alkali metal ion include a lithium ion, a sodium ion, a potassium ion, a rubidium ion, and a cesium ion, and the alkali metal ion may be a lithium ion, a sodium ion, or a potassium ion, may be a lithium ion or a sodium ion, or may be a lithium ion. Hereinafter, a structural unit containing a functional group (A) and a metal ion that is a counter cation of the functional group (A) is also referred to as a structural unit (A). The structural unit (A) may have a structure obtained by radical addition polymerization of a monomer having an ethylenically unsaturated group. The metal ion, which is the counter cation of the functional group (A), may be the same alkali metal ion as the alkali metal ion contained in the ion conductive inorganic solid electrolyte.

The structural unit (A) may have, as the functional group (A), at least one selected from the group consisting of a conjugated anion of a sulfonylimide group, a conjugated anion of a sulfonate group, and a conjugated anion of a phenolic hydroxyl group. The conjugated anion of the sulfonylimide group, the conjugated anion of the sulfonate group, and the conjugated anion of the phenolic hydroxyl group may be contained in, for example, a group having a conjugated anion of the sulfonylimide group, a group having a conjugated anion of the sulfonate group, and a group having a conjugated anion of the phenolic hydroxyl group, which will be described below.

The group having a sulfonylimide group may be contained in the structural unit (A) represented by the following formula (A1).

[Chem. 1]

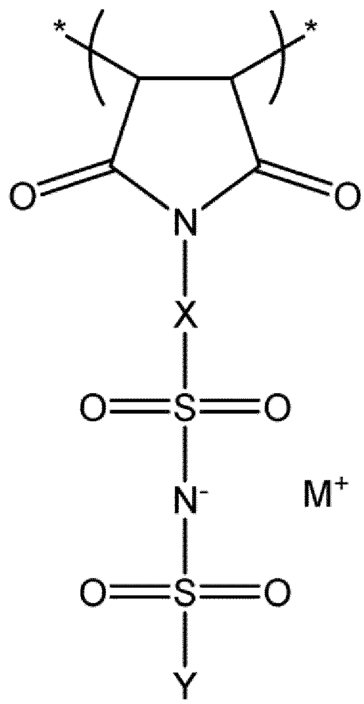

(A1)

(In formula (A1), X is a divalent organic group having 1 to 20 carbon atoms, Y is a halogen atom or a monovalent organic group having 1 to 20 carbon atoms, $M^+$ is an alkali metal ion, and * represents a position at which a structural unit (A1) is bonded to another structural unit).

X is not particularly limited, and may be a hydrocarbon group, a group having a hetero atom, or a heterocyclic ring. More specific examples of X include a divalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the divalent group may have a substituent that substitutes for a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. X may be bonded to one or both of a nitrogen atom of a maleimide group and a sulfur atom of a sulfonyl group by a carbon atom of X.

The number of carbon atoms of X may be 1 to 15, 2 to 10, or 3 to 8. X may be a group having an aromatic ring, or may be a group having an aromatic carbocyclic ring such as a benzene ring. A substituent such as an alkyl group, a halogen atom, or an electron-withdrawing group may be bonded to a carbon atom which is a ring member of the carbocyclic ring. The hydrocarbon group as X is preferably a phenylene group, an alkylene group having 1 to 8 carbon atoms, a polyoxyalkylene group, or a group in which some or all of hydrogen atoms bonded to carbon atoms of these groups are substituted with a halogen atom such as a fluorine atom, and more preferably a phenylene group or a substituted phenylene group substituted with an alkyl group, a halogen atom, an electron-withdrawing group, or the like. Examples of the electron-withdrawing group include a halogen atom, a sulfonic acid group or a salt thereof, a sulfonic acid ester, a nitro group, and a nitrile group.

In formula (A1), when Y is a monovalent organic group, the organic group is not particularly limited, and may be a hydrocarbon group, a group having a hetero atom, or a heterocyclic group. More specific examples of Y include a

monovalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the monovalent group may have a substituent that substitutes for a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms of Y may be 1 to 15, 1 to 10, 1 to 8, 1 to 5, or 1 to 3. The hydrocarbon group as Y is preferably a phenyl group, an alkyl group having 1 to 5 carbon atoms, or a group in which some or all of hydrogen atoms bonded to carbon atoms of these groups are substituted with a halogen atom such as a fluorine atom, more preferably a fluorinated alkyl group having 1 to 5 carbon atoms, and still more preferably a fluorinated alkyl group having 1 to 3 carbon atoms such as a trifluoromethyl group. The fluorinated alkyl group may be a perfluorinated alkyl group. When Y is a halogen atom, the halogen atom is preferably a fluorine atom or a chlorine atom, and more preferably a fluorine atom.

In formula (A1), $M^+$ is preferably a lithium ion ($Li^+$), a sodium ion ($Na^+$), or a potassium ion ($K^+$), and more preferably a lithium ion. $M^+$ may contain two or three ions of $Li^+$, $Na^+$, and $K^+$, and preferably contains substantially only a single ion.

The group having a conjugated anion of a phenolic hydroxyl group is a group having a group in which a hydroxyl group (that is, a phenolic hydroxyl group (-OH)) directly bonded to an aromatic ring is alkali metallized (that is, M is a -OM group as an alkali metal).

The structural unit (A) may be a group represented by the following formula (A2).

[Chem. 2]

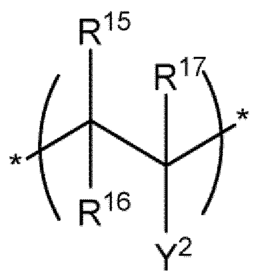

(A2)

(In formula (A2), $Y^2$ represents a group having an alkali metallized phenolic hydroxyl group or a group having a conjugated anion of sulfonic acid, and * represents a binding site of the structural unit (A2) to another structural unit, $R^{15}$ to $R^{17}$ are each independently a hydrogen atom or a monovalent substituent, or $R^{16}$ is a hydrogen atom or a monovalent substituent, and $R^{15}$ and $R^{17}$ together form a divalent substituent.)

One or more of $R^{15}$ to $R^{17}$ may be a hydrogen atom, or may be all hydrogen atoms.

When $R^{15}$ to $R^{17}$ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

For $R^{15}$ to $R^{17}$, the monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^{15}$ and $R^{17}$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O)O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

When $Y^2$ is a group having a phenolic hydroxyl group, $Y^2$ may be a group represented by any one of the following formulas (A21) to (A26).

[Chem. 3]

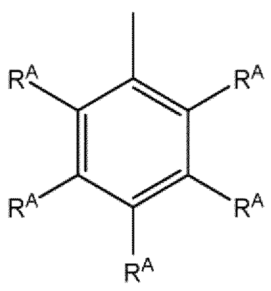

(A21)

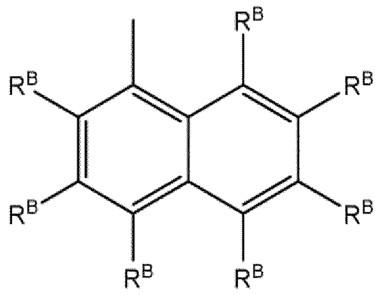

(A22)

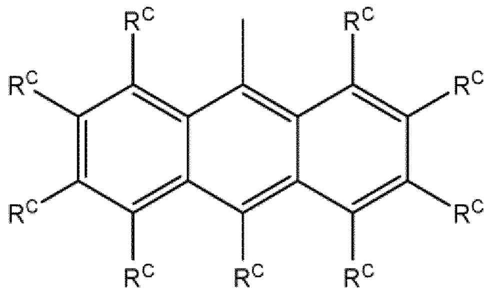

(A23)

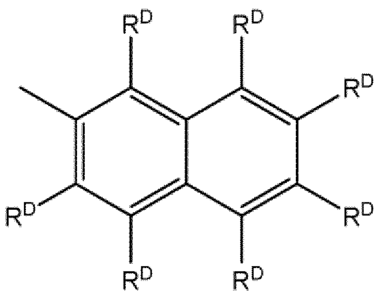

(A24)

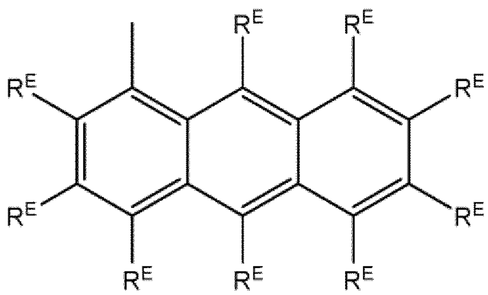

(A25)

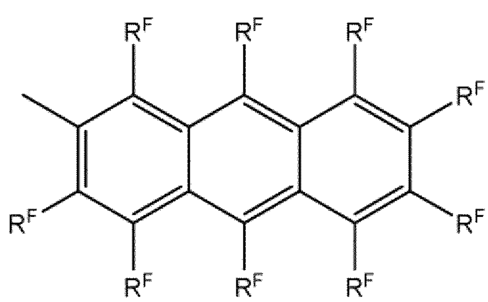

(A26)

(In formula (A21), at least one of $R^A$ groups is a -OM group, the rest is a hydrogen atom or a monovalent substituent, and M is an alkali metal element, and may be Li, Na, or K, in formula (A22), at least one of $R^B$ groups is a -OM group, the rest is a hydrogen atom or a monovalent substituent, and M is an alkali metal element, and may be Li, Na, or K, in formula (A23), at least one of $R^C$ groups is a -OM group, the rest is a hydrogen atom or a monovalent substituent, and M is an alkali metal element, and may be Li, Na, or K, in formula (A24), at least one of $R^D$ groups is a -OM group, the rest is a hydrogen atom or a monovalent substituent, and M is an alkali metal element, and may be Li, Na, or K, in formula (A25), at least one of $R^E$ groups is a -OM group, the rest is a hydrogen atom or a monovalent substituent, and M is an alkali metal element, and may be Li, Na, or K, and in formula (A26), at least one of $R^F$ groups is a -OM group, the rest is a hydrogen atom or a monovalent substituent, and M is an alkali metal element, and may be Li, Na, or K.)

When the polymer contains a functional group of formula (A21), in the benzene ring of formula (A21), a -OM group may be bonded to the para position as viewed from the binding site between the functional group of formula (A21) and the polymer. In addition, the $R^{A3}$ group may be a -OA group. A hydrogen atom, a -OA group, a methyl group, an ethyl group, and a monovalent organic group having 1 to 20 carbon atoms (where in a case where the monovalent organic group is a saturated hydrocarbon group, the monovalent organic group is a methyl group, an ethyl group, or a group having 6 to 20 or 6 to 15 carbon atoms, and in a case where the monovalent organic group is an alkoxy group, the monovalent organic group is a group having 4 to 20 or 4 to 15 carbon atoms) may be independently bonded to the meta position or the ortho position and the meta position as viewed from the binding site.

The groups represented by formulas (A21) to (A26) may have one to three -OM groups, may have one or two -OM groups, and may have one -OM group.

In formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in formulas (A21) to (A26), the monovalent substituent may be an organic group having 1 to 20 carbon atoms. The number of carbon atoms of the organic group may be 1 to 15, 1 to 10, 1 to 5, or 1 to 3. Examples of the organic group include a monovalent group such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group. Note that the monovalent organic group itself may be an electron-withdrawing group.

When $Y^2$ is a group having a conjugated anion of a sulfonic acid, examples of $Y^2$ include a group represented by the following formula (A3).

[Chem. 4]

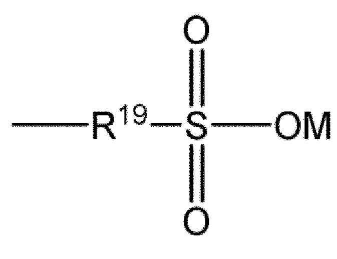

(A3)

(In formula (A3), $R^{19}$ is a covalent bond or a divalent organic group, and M is an alkali metal element and may be Li, Na, or K or may be Li.)

In formula (A3), the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or

an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methylene group and a phenylene group.

Examples of the group having a conjugated anion of a sulfonic acid include $-SO_3M$, $-CH_2-SO_3M$, and $-C_6H_4-SO_3M$.

The functional group (B) is a functional group having a function as an anion receptor. The anion receptor refers to a chemical species that captures an anion by forming an electrostatic interaction, a hydrogen bond, an acid-base complex, or the like with the anion. The functional group (B) captures the counter anion of the metal ion in the metal salt and promotes dissociation between the counter anion and the metal ion. This increases the mobility of the metal ions. In addition, since the counter anion is captured by the polymer via the structural unit (B), the mobility of the counter anion decreases. As a result, it is considered that the transport number of metal ions is improved. In addition, since the mobility of the metal ions increases, the conductivity of the metal ions tends to be improved.

Low molecular weight chemical species (compounds and the like) that function as anion receptors are known, and examples thereof include compounds described in US Patent No. 6,022,643, US Patent No. 5,705,689, US Patent No. 6,120,941, and the like. The functional group (B) has a structure corresponding to a chemical species that functions as an anion receptor. Since the functional group is immobilized on the polymer, the captured anion can be immobilized on the structure of the polymer unlike a conventional low molecular weight anion receptor. Therefore, it is considered that it is possible to more effectively suppress the participation of the anion in the current due to the movement.

Note that the counter anion of the alkali metal salt is not necessarily a completely ionized free anion when being captured by the functional group, and may be captured by interacting with the functional group in a state of forming an ionic bond or an ionic pair with a metal ion.

The functional group having a function as an anion receptor may have Lewis acidity. In this case, the functional group can capture an anion by accepting a non-covalent electron pair of anions and forming an acid-base complex. Examples of such a functional group include a functional group having an electron-deficient atom. Note that the electron-deficient atom refers to an atom that is covalently bonded to another atom but has no octet formed by the outermost electron of the atom. Examples of the electron-deficient atom include atoms belonging to group 13 of the periodic table, and more specifically, may be at least one of aluminum and boron, or may be boron.

In addition, the functional group having a function as an anion receptor may be a group having an azaether moiety. The group having an azaether moiety is a group having an azaether compound as a substituent, and the azaether compound is a compound in which -O- of an ether compound is substituted with $-NR^E-$ (where $R^E$ is a hydrogen atom or an organic group). The azaether moiety may be either a linear azaether moiety or a cyclic azaether moiety and may have both a linear azaether moiety and a cyclic azaether moiety. The group having an azaether moiety may have an electron-withdrawing group in, for example, a hydrocarbon moiety.

The functional group (B) may be contained, for example, in the structural unit (B) represented by formula (B).

[Chem. 5]

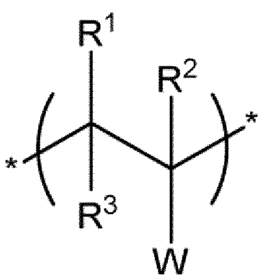

(B)

(In formula (B), W represents a functional group having a function as an anion receptor, $R^1$ to $R^3$ each independently represent a hydrogen atom or a monovalent substituent, or $R^3$ represents a hydrogen atom or a monovalent substituent, and $R^1$ and $R^2$ together form a divalent organic group, and * represents a position at which the structural unit (B) is bonded to another structural unit.)

The polymer having the ability to preferentially conduct metal ions may contain one or two or more structural units represented by formula (B).

One or more of $R^1$ to $R^3$ may be a hydrogen atom, or may be all hydrogen atoms. W may be a group represented by the following formula (B1).

When $R^1$ to $R^3$ are monovalent substituents, the monovalent substituent may be a monovalent organic group. The number of carbon atoms of the organic group may be 1 to 20, 1 to 15, 1 to 10, 1 to 5, or 1 to 3. Examples of the organic

group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

Note that, in the present specification, the aromatic hydrocarbon group is a group having an aromatic moiety, and may have an aliphatic moiety. In addition, in the present specification, the cyclic hydrocarbon group is a group having a cyclic hydrocarbon moiety, and may have a linear or branched hydrocarbon moiety.

The monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^1$ and $R^2$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O) O-. In addition, the divalent organic group may have a substituent that substitutes for a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

W preferably has a group represented by formula (B1).

[Chem. 6]

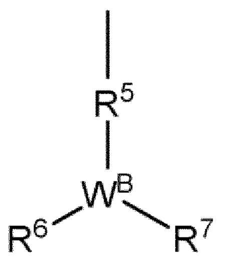

(B1)

(In formula (B1), $W^B$ is an atom belonging to group 13 of the periodic table, $R^5$ is a covalent bond or a divalent organic group, and each of $R^6$ and $R^7$ is a hydrogen atom, a -OH group, a halogen atom, or a monovalent organic group, or together form a divalent organic group, and $R^6$ and $R^7$ may be the same group or different groups.)

$W^B$ may be at least one of aluminum and boron, or may be boron.

When $R^5$ is a divalent organic group, the number of carbon atoms of the divalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes for a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^5$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group. $R^5$ may be a covalent bond.

When $R^6$ or $R^7$ is a halogen atom, $R^6$ or $R^7$ may be any of a fluorine atom, a chlorine atom, a bromine atom, and an iodine atom, and a fluorine atom is preferable.

When $R^6$ or $R^7$ is a monovalent organic group, the number of carbon atoms of the monovalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or - C(=O) O-. In addition, the monovalent organic group may have a substituent that substitutes for a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^6$ or $R^7$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

W may be a group represented by formula (B1a) or a group represented by formula (B1b).

[Chem. 7]

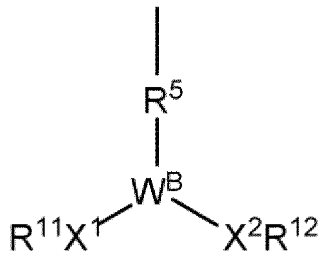

(B1a)

(In formula (B1a), each of $X^1$ and $X^2$ is an oxygen atom (ether bond) or a covalent bond, each of $R^{11}$ and $R^{12}$ is a halogen atom, a monovalent hydrocarbon group, a hydrogen atom, or a monovalent halogen-substituted hydrocarbon group, and may be a halogen atom (excluding a case where X is an oxygen atom), a monovalent hydrocarbon group, or a monovalent halogen-substituted hydrocarbon group, and at least one of $R^{11}$ and $R^{12}$ may be a monovalent hydrocarbon group or a monovalent halogen-substituted hydrocarbon group, and $R^{11}$ and $R^{12}$ may be the same group or different groups.)

[Chem. 8]

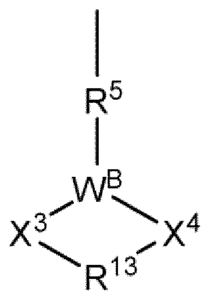

(B1b)

(In formula (B1b), each of $X^3$ and $X^4$ is an oxygen atom (ether bond) or a covalent bond, and $R^{13}$ is a divalent hydrocarbon group or a divalent halogen-substituted hydrocarbon group.)

In formula (B1a), when $R^{11}$ is a halogen atom, $X^1$ may be a covalent bond, and when $R^{12}$ is a halogen atom, $X^2$ may be a covalent bond. When $R^{11}$ or $R^{12}$ is a monovalent hydrocarbon group or a monovalent halogen-substituted hydrocarbon group, the number of carbon atoms of the monovalent hydrocarbon group or the monovalent halogen-substituted hydrocarbon group may be 1 to 20, 1 to 15, 1 to 10, 1 to 5, or 1 to 3. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

$R^{11}$ or $R^{12}$ are each independently -F, $-CH_3$, $-C_2H_5$, $-C_3H_7$, $-C_6H_5$ (phenyl group), $-C_6H_nF_{5-n}$ (n is an integer of 0 to 4 and may be an integer of 0 to 3), $-CF_3$, $-CH_2CF_3$, $-CH_2CF_3CF_7$,$-CH(CF_3)_2$, $-C(CF_3)_2-C_6H_5$, $- C(CF_3)_3$, or $-C_6H_n(CF_3)_{5-n}$ (n is an integer of 0 to 4 and may be 1 or 2.)

In formula (B1b), the number of carbon atoms of the divalent hydrocarbon group or the divalent halogen-substituted hydrocarbon group may be 1 to 20, 1 to 15, 2 to 10, or 3 to 8. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

Examples of $R^{13}$ include $-C_2H_4-$, $-C_3H_6-$, $-C_4H_8-$, $-C_5H_{10}-$, $-C_6H_{12}-$, $-C_7H_{14}-$, $-C_8H_{16}-$, $-C_9H_{18}-$, and $-C_{10}H_{20}-$, in which these hydrogen atoms are partially or entirely substituted with fluorine. More specifically, $-C(CH_3)_2-C(CH_3)_2-$ is preferable.

A molar ratio m of the structural unit (B) to all structural units contained in the polymer may be 0.2 to 0.8, 0.25 to 0.75, 0.3 to 0.7, 0.35 to 0.65, or 0.4 to 0.6.

A molar ratio n of the structural unit (A) to all structural units contained in the polymer may be 0.25 to 0.75, 0.3 to 0.7, 0.35 to 0.65, or 0.4 to 0.6.

There is no problem as long as the sum of m and n is 1 or less, and the sum of m and n may be 0.95 or less. In addition, the sum of m and n may be 0.5 or more, 0.6 or more, 0.7 or more, 0.8 or more, 0.9 or more, or 0.95 or more.

A content of the structural unit (A) with respect to the total mass of the polymer may be 5 to 90 mass%, 20 to 80 mass%, 40 to 75 mass%, or 55 to 70 mass%.

A content of the structural unit (B) with respect to the total mass of the polymer may be 10 to 95 mass%, 15 to 95 mass%, 20 to 95 mass%, 20 to 80 mass%, 25 to 60 mass%, or 30 to 45 mass%.

The total content of the structural unit (A) and the structural unit (B) may be 50 mass% or more, 70 mass% or more, 90 mass% or more, or 95 mass% or more, with respect to the total mass of the polymer.

The polymer may contain a structural unit (C) which is a structural unit different from both the structural unit (A) and the structural unit (B). Examples of the structural unit (C) include a structural unit represented by a structural unit (C1) and a structural unit represented by a structural unit (C2) described below.

[Chem. 9]

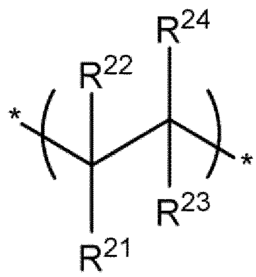

(C1)

(In formula (C1), $R^{21}$ to $R^{24}$ are each independently a hydrogen atom, a halogen atom, or a monovalent organic group having 1 to 20 carbon atoms, and * represents a position at which the structural unit (C1) is bonded to another structural unit.)

[Chem. 10]

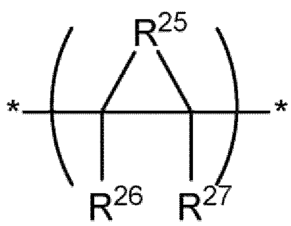

(C2)

(In formula (C2), $R^{25}$ is a divalent organic group having 1 to 20 carbon atoms, and each of $R^{26}$ and $R^{27}$ is a

hydrogen atom, a halogen atom, or a monovalent organic group having 1 to 20 carbon atoms, and $R^{25}$ may form a ring having an ethylene unit of formula (C2) and an imide group (succinimide ring or N-derivative thereof) or a ring having an acid anhydride group (succinic anhydride ring.)

One or two or more of $R^{21}$ to $R^{24}$ may be a monovalent organic group. The monovalent organic group may be a group represented by - $Z^1$-$R^{29}$. The number of carbon atoms in each of $R^{21}$ to $R^{24}$ may be 1 to 40, 1 to 20, 2 to 15, or 4 to 13. Here, $Z^1$ is a divalent linking group, and may be, for example, a group represented by a covalent bond, -O-, -S-, - C(=O)-, -C(=O)O-, -OC(=O)-, -C(=O)NR$^{38}$-, or -NR$^{39}$C(=O)-. When $Z^1$ is a covalent bond, -O-, -S-, -C(=O)-, -C(=O)O-, or -OC(=O)-, $R^{29}$ is a hydrogen atom or a monovalent organic group. When Z is - C(=O)NR$^{38}$-, each of $R^{29}$ and $R^{38}$ is a hydrogen atom or a monovalent organic group, or $R^{29}$ forms a ring together with $R^{38}$. In the case of - NR$^{39}$C(=O)-, each of $R^{29}$ and $R^{39}$ is a hydrogen atom or a monovalent organic group, or $R^{29}$ forms a ring together with $R^{39}$. The monovalent organic group as $R^{29}$, $R^{38}$, or $R^{39}$ may have 1 to 20 or 1 to 10 organic groups. When $R^{38}$ is a monovalent organic group, $R^{38}$ may be a monovalent hydrocarbon group having 1 to 20 carbon atoms. When $Z^1$ is a covalent bond or -C(=O)O-, $R^{29}$ may be a hydrogen atom or a monovalent hydrocarbon group having 1 to 20 carbon atoms. When $Z^1$ is a covalent bond and $R^{29}$ is a hydrocarbon group, the hydrocarbon group may be an aliphatic hydrocarbon group. In addition, $R^{29}$ may be a monovalent organic group other than a hydrocarbon group or a hydrocarbon group having a ring structure. When $Z^1$ is -O-, $Z^1$ may be a monovalent organic group other than a group represented by W-H with W as an alkyl ether. When $R^{26}$ to $R^{28}$ are monovalent organic groups, examples of the monovalent organic group include the same groups as those exemplified for $R^{25}$.

In addition, the structural unit (C) may include a structural unit (also referred to as a structural unit (Ap)) that is a precursor of the structural unit (A). Examples of such a structural unit include an unreacted structural unit and an intermediate structural unit which could not be converted into the structural unit (A) among the structural units (for example, a structural unit derived from a monomer (A2') described below) which are precursors of the structural unit (A), and examples thereof include a group which is a conjugated acid of the structural unit (A) (that is, an alkali metal ion which is a counter cation of the structural unit (A) is substituted with $H^+$) and a group in which a counter cation of the structural unit (A) is substituted with a cation other than an alkali metal ion. Examples of the counter cation contained in the structural unit (Ap) include metal ions such as $NH_4^+$, an organic ammonium cation, and an alkaline earth metal ion. The polymer may contain the structural unit (A) in an amount of 85 mol% or more, 90 mol% or more, or 95 mol% or more, with respect to the total amount of the structural unit (A) and the structural unit (Ap).

The polymer may contain a structural unit derived from a hydrocarbon compound having a plurality of ethylenically unsaturated groups such as butadiene and isoprene.

The polymer may contain a structural unit derived from a crosslinking agent. Examples of the crosslinking agent include compounds having a plurality of ethylenically unsaturated groups in the molecule, such as hexanediol diacrylate, pentaerythritol tetraacrylate, divinylbenzene, and triethylene glycol divinyl ether.

A number average molecular weight (Mn) of the polymer may be 5,000 to 200,000, 8,000 to 120,000, or 10,000 to 100,000. A weight average molecular weight (Mw) of the polymer may be 5,000 to 300,000, 10,000 to 250,000, or 20,000 to 100,000. A molecular weight distribution (Mw/Mn) of the polymer may be 1.0 to 3.5 or 1.3 to 2.7. The number average molecular weight and the weight average molecular weight of the polymer can be measured by, for example, gel permeation chromatography.

A content of the polymer in the electrolyte composition may be 1 to 40 mass%, 2 to 30 mass%, or 4 to 20 mass%.

The content of the polymer in the electrolyte composition may be 1 to 50 vol%, 5 to 40 vol%, or 10 to 35 vol%.

The method for producing the polymer is not particularly limited, and examples thereof include a method of polymerizing a monomer (monomer mixture) including at least one of a monomer containing an alkali metal ionized anionic functional group or a monomer containing a precursor of the anionic functional group (hereinafter, referred to as a monomer (A')), and a monomer containing a functional group having a function as an anion receptor (B'). The monomer may further include a monomer (C') different from the monomer (A') and the monomer (B').

The monomer (A') and the monomer (B') may have an ethylenically unsaturated group. In this case, the monomer (A') and the monomer (B') can be polymerized by radical addition polymerization. In this case, the monomer can be polymerized in the presence of an initiator. That is, the polymerization reaction may be performed in a polymerizable composition containing a monomer and an initiator.

The monomer (A') is a monomer from which the structural unit (A) is derived in the polymer. Examples of the monomer (A') include a monomer (A1') represented by the following formula (A1') and a monomer (A2') represented by the following formula (A2').

[Chem. 11]

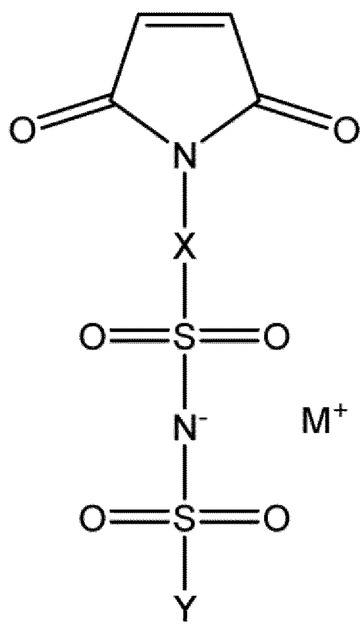

(A1')

(X, Y, and $M^+$ in formula (A1') have the same meanings as in formula (A1).)

[Chem. 12]

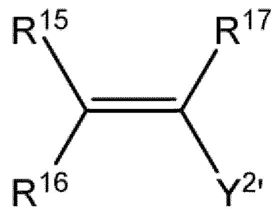

(A2')

(In formula (A2'), $R^{15}$ to $R^{17}$ have the same meanings as $R^{15}$ to $R^{17}$ in formula (A2), and Y2' is a group having a group capable of inducing a phenolic hydroxyl group corresponding to a -OM group of $Y^2$ in formula (A2) or a group capable of inducing a sulfonic acid group corresponding to a $-SO_3M$ group of $Y^2$.)

$Y^{2'}$ may be the same group as $Y^2$, and may be a group that is a precursor of $Y^2$. That is, $Y^{2'}$ is a group having a group convertible to a -OM group or an $-SO_3M$ group at the same position as the -OM group or the $-SO_3M$ group of $Y^2$ to be obtained.

Examples of the group capable of inducing a phenolic hydroxyl group corresponding to the -OM group of $Y^2$ include a hydrolyzable group, and a phenolic hydroxyl group can be introduced at a position corresponding to the -OM group of $Y^2$ by hydrolyzing the hydrolyzable group. Examples of the hydrolyzable group include an alkoxide group and a $-OSi(R^k)_3$ group ($R^k$ is a monovalent organic group such as a hydrocarbon group). The phenolic hydroxyl group can be converted into a -OM group by reacting with, for example, a basic salt of an alkali metal such as MOH, $M_2CO_3$, or $MHCO_3$.

Similarly, examples of the group capable of inducing a sulfonic acid group corresponding to the $-SO_3M$ group of $Y^2$ include groups capable of inducing a sulfonic acid group ($-SO_3H$) such as a sulfonic acid ester group and a $-SO_2Cl$ group. The sulfonic acid group can be converted into a -OM group by, for example, reacting with a salt of an alkali metal such as MOH, $M_2CO_3$, $MHCO_3$, or an alkali metal halide. In addition, the $-SO_2Cl$ group can also be reacted with MOH to be converted into a $-SO_3M$ group. When an excess amount of MOH is used, most $-SO_2Cl$ groups can also be converted to $-SO_3M$ groups. In such a reaction, some $-SO_2Cl$ groups may be $-SO_3H$ group, and the $-SO_3H$ group may be reacted with a base containing M separately to form a $-SO_3M$ group. In addition, $Y^{2'}$ may be a group having the same anion moiety as $Y^2$ and forming a salt with a cation other than an alkali metal ion. In this case, the structural unit (A2) can be derived by

subjecting the obtained polymer to a cation exchange reaction. A reaction rate of Y2' (a proportion of $Y^{2'}$ converted to $Y^2$ in the total amount of $Y^{2'}$) may be 85 mol% or more, 90 mol% or more, or 95 mol% or more.

The monomer (B') is a monomer from which the structural unit (B) is derived in the polymer. Examples of the monomer (B') include a monomer (B') represented by the following formula (B').

[Chem. 13]

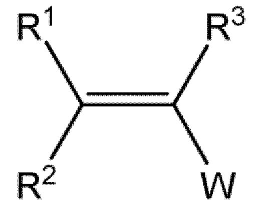

(B')

(In the formula, $R^1$ to $R^3$ and W have the same meanings as $R^1$ to $R^3$ and W in formula (B).)

The radical polymerization initiator may be either a thermal initiator or a photoinitiator. For example, examples of the thermal initiator include 2,2-azobis (isobutyronitrile)(AIBN); an azo-based initiator such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), or dimethyl-2,2-azobisisobutyrate (MAIB); and an organic peroxide such as dibenzoyl peroxide, di-8,5,5-trimethylhexanoyl peroxide, dilauroyl peroxide, didecanoyl peroxide, or di(2,4-dichlorobenzoyl)peroxide. Examples of the photoinitiator include an oxime-based compound, a metallocenebased compound, an acylphosphine-based compound, and an aminoacetophenone compound. One or two or more initiators may be used.

[Organic Solvent]

The organic solvent may be an aprotic solvent, and may be, for example, at least one selected from the group consisting of a carbonate-based solvent, a fluorine-based solvent, and an ether-based solvent.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane. Examples of the fluorine-based solvent include hydrofluorocarbons such as perfluorooctane; hydrofluoroethers such as methyl nonafluorobutyl ether and ethyl nonafluorobutyl ether, and hydrofluoroolefins such as 1,3,3,3-tetrafluoropropene. In addition, examples of the solvent include dimethyl sulfoxide (DMSO); and aprotic solvents such as amide-based solvents such as dimethylformamide (DMF) and dimethylacetamide (DMA). The organic solvents may be used alone or as a mixed solvent including two or more organic solvents.

When a mixed solvent is used, for example, the organic solvent may be a mixed solvent including two or more carbonate-based solvents, may be a mixed solvent including two or more cyclic carbonates, or may be a mixed solvent containing ethylene carbonate and propylene carbonate.

A content of the organic solvent may be 1 to 45 mass%, 4 to 40 mass%, or 7 to 30 mass%, with respect to the total amount of the electrolyte composition.

The content of the organic solvent may be 1 to 70 vol%, 4 to 60 vol%, or 20 to 50 vol%, with respect to the total amount of the electrolyte composition. A mass ratio of the polymer and the organic solvent in the electrolyte composition may be 1:0.5 to 1:3 or 1:1 to 1:2.5. In the electrolyte composition, the polymer may be swollen by a solvent containing an organic solvent. The electrolyte composition may be in a gel state.

The electrolyte composition may contain a metal salt in addition to the polymer. The metal salt may be at least one of an alkali metal salt and an alkaline earth metal salt, or may be an alkali metal salt. The alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h}+_1)SO_2]_2N$ (h is 0 to 3), where M is the alkali metal. When the polymer contains a structural unit (A), M may be the same alkali metal element as the alkali metal element of the structural unit (A). M may be lithium, sodium, or potassium, or may be lithium. In addition, when the polymer contains the functional group (B), the electrolyte composition may contain an alkali metal salt.

The electrolyte composition may be a composite further containing other resins such as a fluorine-based resin (a resin other than a polymer having an ability to preferentially conduct metal ions), a fabric such as a nonwoven fabric, a

porous material, a viscosity adjusting material, and the like. The fluorine-based resin is preferably a resin having a carbon chain as a main chain. The carbon chain may be formed by radical polymerization of an ethylenically unsaturated group. Examples of the fluorine-based resin include poly(vinylidene fluoride-co-hexafluoropropylene) (PVDF-HFP), polyvinylidene fluoride (PVDF), and polytetrafluoroethylene (PTFE). A content of the other resins in the electrolyte composition may be 30 mass% or less, 0.1 to 20 mass%, 1 to 15 mass%, or 1 to 10 mass% with respect to the total amount of the electrolyte composition.

The total amount of the ion conductive inorganic solid electrolyte, the polymer having the ability to preferentially conduct metal ions, and the organic solvent in the electrolyte composition may be 70 mass% or more, 80 mass% or more, 90 mass% or more, 95 mass% or more, 97 mass% or more, 99.9 mass% or less, or 99 mass% or less, with respect to the total amount of the electrolyte composition. In addition, the total amount of the ion conductive inorganic solid electrolyte, the polymer having the ability to preferentially conduct metal ions, and the organic solvent in the electrolyte composition may be 70 to 99.9 mass% or 80 to 99 mass% with respect to the total amount of the electrolyte composition.

The total amount of the ion conductive inorganic solid electrolyte, the polymer having the ability to preferentially conduct metal ions, and the organic solvent in the electrolyte composition may be 70 vol% or more, 80 vol% or more, 90 vol% or more, 95 vol% or more, 97 vol% or more, 99.9 vol% or less, or 99 vol% or less, with respect to the total amount of the electrolyte composition. In addition, the total amount of the ion conductive inorganic solid electrolyte, the polymer having the ability to preferentially conduct metal ions, and the organic solvent in the electrolyte composition may be 70 to 99.9 vol% or 80 to 99 vol% with respect to the total amount of the electrolyte composition.

A transport number of metal ions of the electrolyte composition at room temperature (25°C) may be 0.4 or more, 0.5 or more, 0.6 or more, or 0.7 or more. The transport number may be a transport number of alkali metal ions or alkaline earth metal ions, may be a transport number of alkali metal ions, or may be a transport number of lithium ions.

An oxidation potential of the electrolyte composition may be 4.0 or more with respect to $Li/Li^+$.

An ionic conductivity of the electrolyte composition of the present embodiment at 25°C of $10^{-4}$ S/cm or more.

The electrolyte composition of the present embodiment tends to have high flexibility. For example, a dynamic hardness DH of the electrolyte composition of the present embodiment may be $10^3$ N/mm$^2$ or less, $8.0 \times 10^2$ N/mm$^2$ or less, $6.0 \times 10^2$ N/mm$^2$ or less, or $5.0 \times 10^2$ N/mm$^2$ or less, as calculated from the following formula using a test result by a nanoindenter at 25°C. In the measurement by the nanoindenter, a test force reaching a preset indentation depth h may be measured, or an indentation depth by a preset test force may be measured. A measurement sample of the nanoindenter may be, for example, a sheetlike sample having a diameter of 1.5 cm obtained by press-molding 150 mg of an electrolyte composition at a pressure of 200 MPa. Note that the value of the dynamic hardness DH may be obtained from an average value of test results of several points (for example, five points) measured so as not to overlap each other.

$$DH = \alpha \times F/h^2 \times 10^3$$

$\alpha$ = 3.8584: constant depending on indenter shape
F: test force (mN)
h: indentation depth.

The electrolyte composition of the present embodiment has a dynamic hardness DH of $10^3$ N/mm$^2$ or less as calculated from the following formula using a test result by a nanoindenter at 25°C, may contain a polymer having an ability to preferentially conduct metal ions and an organic solvent, and may further contain an ion conductive inorganic solid electrolyte.

The electrolyte composition of the present embodiment can be used as a constituent material of an electrochemical device such as a capacitor or a battery, and for example, can be used as a material of an electrolyte of a battery. The electrolyte may be formed by pressuremolding the electrolyte composition. Examples of the battery include batteries that perform charge and discharge by movement of alkali metal ions, such as a lithium ion battery and a sodium ion battery. The battery may be a primary battery, a secondary battery, or an all-solid-state battery. The electrolyte composition of the present embodiment may be a nonliquid electrolyte composition such as a solid electrolyte composition.

The battery of the present embodiment includes a positive electrode, a negative electrode, and an electrolyte disposed between the positive electrode and the negative electrode. The electrolyte may contain the electrolyte composition of the present embodiment. For example, in a case of a lithium ion battery, a positive electrode is not particularly limited, and may contain a positive electrode active material, and may contain a conductive auxiliary agent, a binder, and the like, if necessary.

The positive electrode may be formed by forming a layer containing these materials on a current collector. Examples of the positive electrode active material include a lithium-containing composite metal oxide containing lithium (Li) and at least one transition metal selected from the group consisting of V, Cr, Mn, Fe, Co, Ni, Cu, and Al. Examples of such a lithium composite metal oxide include $LiCoO_2$, $LiNiO_2$, $LiMn_2O_4$, $Li_2MnO_3$, $LiNi_xMn_yCo_{1-x-y}O_2$ [$0<x+y<1$],

$LiNi_xCo_yAl_{1-x-y}O_2$ [0<x+y<1], $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$.

The negative electrode of the lithium ion battery is not particularly limited, and may contain a negative electrode active material, and may contain a conductive auxiliary agent, a binder, and the like, if necessary. Examples thereof include a simple substance of an element such as Li, Si, P, Sn, Si-Mn, Si-Co, Si-Ni, In, or Au, an alloy or a composite containing these elements, a carbon material such as graphite, and a substance in which lithium ions are inserted between layers of the carbon material.

The lithium ion battery may include a separator. The separator may be a porous material or a resin porous material. Specific examples thereof include a porous polyolefin membrane and a porous ceramic membrane.

A method for producing a battery of the present embodiment may include, for example, a step of preparing an electrolyte composition (coating agent for a battery) and a step of pressurizing the electrolyte composition to produce an electrolyte. The produced electrolyte is disposed between a positive electrode and a negative electrode. The pressurization may be performed by disposing the electrolyte composition on the negative electrode or the positive electrode or between the positive electrode and the negative electrode. In order to suppress evaporation of the organic solvent, the pressurization is preferably performed at a temperature lower than a boiling point (in a case of a mixed solvent, a boiling point is the lowest boiling point among the boiling points of the component solvents) of the organic solvent to be used, and may be performed at 50°C or lower or may be performed at room temperature (25°C). A pressure at the time of pressurization may be, for example, 10 to 300 MPa or 100 to 250 MPa. The pressurization may be performed at 10°C to 60°C or 20°C to 50°C. The step of preparing the electrolyte composition may be performed by mixing each component of an ion conductive inorganic solid electrolyte, a polymer having an ability to preferentially conduct metal ions, and an organic solvent, which are raw materials of the electrolyte composition, and optional components, if necessary, in a mortar or the like. The ion conductive inorganic solid electrolyte may be subjected to an acid treatment before being mixed with other components.

## Examples

[Production of Polymer Having Ability to Preferentially Conduct Metal ions]

A copolymer of a monomer A1 represented by the following formula and styrene (molar ratio: 54:46) was produced as follows.

[Chem. 14]

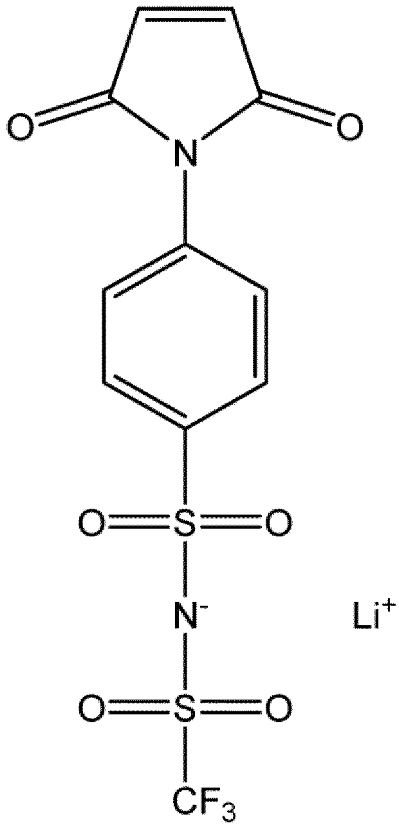

(A1)

First, the monomer A1 was produced as follows.

(Synthesis of Monomer A1)

In a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by KANTO CHEMICAL CO., INC.). Lithium hydroxide (105 mmol, 2.51 g, manufactured by Tokyo Chemical Industry Co., Ltd.) and 4-acetamidobenzenesulfonyl chloride (50 mmol, 11.68 g, manufactured by Tokyo Chemical Industry Co., Ltd.) were sequentially added to the solution, and the mixture was heated and refluxed for 5 hours. After cooling to room temperature, an excessive amount of acetonitrile (700 mL) was added to precipitate a solid, which was separated by filtration and then washed with dichloromethane (manufactured by KANTO CHEMICAL CO., INC.), thereby obtaining an intermediate 1. The yield was 97.1%.

· Structural formula of intermediate 1:

[Chem. 15]

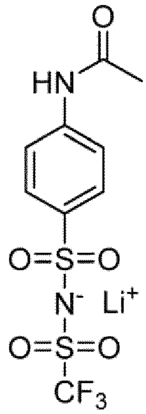

Under a nitrogen atmosphere, 5% hydrochloric acid (22.5 mL) was added to the intermediate 1 (15 mmol, 5.28 g), and the mixture was stirred at 90°C for 2 hours. After cooling to room temperature, an aqueous lithium hydroxide solution was added until the pH reached 7 or higher under the confirmation with a pH test paper or the like, and then a solid was obtained by drying under reduced pressure. The obtained solid was extracted with an acetonitrile solution, and dried under reduced pressure, thereby obtaining an intermediate 2. The yield was 92.6% based on the raw material of the intermediate 1.

· Structural formula of intermediate 2:

[Chem. 16]

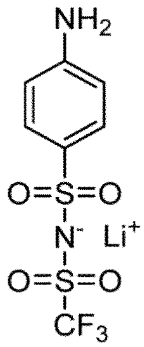

Maleic anhydride (13.3 mmol, 1.30 g, manufactured by Tokyo Chemical Industry Co., Ltd.) was dissolved in dehydrated 1,4-dioxane (manufactured by KANTO CHEMICAL CO., INC.) under a nitrogen atmosphere. The entire amount of a dehydrated tetrahydrofuran (26.4 mL, manufactured by KANTO CHEMICAL CO., INC.) solution of the intermediate 2 (13.2 mmol, 4.09 g) prepared under a nitrogen atmosphere was added dropwise to the solution, and the mixture was stirred at room temperature for 12 hours. After the reaction, a precipitate was filtered and vacuum-dried at 60°C for 4 hours, thereby obtaining a solid containing an intermediate 3.

· Structural formula of intermediate 3:

[Chem. 17]

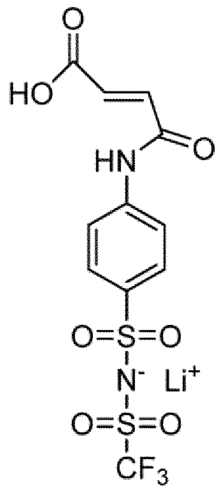

Under a nitrogen atmosphere, a solid containing the intermediate 3 (14.0 mmol, 5.70 g) and an aqueous sodium acetate solution (13.3 mmol, 1.09 g, manufactured by Tokyo Chemical Industry Co., Ltd.) were added to acetic anhydride (12.3 mL, manufactured by Tokyo Chemical Industry Co., Ltd.), and the mixture was stirred at 70°C for 3 hours. The entire amount of the solution after the reaction was added dropwise to an excess amount of diethyl ether (manufactured by KANTO CHEMICAL CO., INC.) at 0°C, and a precipitate was collected by filtration. The precipitate was extracted with dehydrated acetonitrile (manufactured by KANTO CHEMICAL CO., INC.) under an inert atmosphere and dried under reduced pressure, thereby obtaining a monomer A1. The yield throughout the entire process was 72.8%.

3.121 g of the monomer A1, 0.833 g of styrene, and 57.5 mg of AIBN were dissolved in 70 mL of dehydrated acetonitrile, and the mixture was reacted at 60°C for 24 hours under a nitrogen atmosphere while confirming a monomer consumption rate by adding tetralin as an internal standard substance. A polymerization solution was dialyzed in acetonitrile and vacuum-dried at 120°C, thereby obtaining 3.50 g (yield 89%) of a polymer. A monomer introduction ratio was A1:styrene = 54:46. The monomer introduction ratio was calculated from $^1$H-NMR of the copolymer. Note that, as styrene, a commercially available reagent having a purity of > 98% manufactured by Aldrich was sealed with $CaCl_2$ and dried overnight, and $CaH_2$ was added and distilled under reduced pressure to improve the purity.

In the copolymer, a number average molecular weight Mn was $9.3 \times 10^4$, a weight average molecular weight Mw was $3.0 \times 10^5$, and a molecular weight distribution Mw/Mn was 3.19.

[Ion Conductive Inorganic Solid Electrolyte]

As the ion conductive inorganic solid electrolyte, the following was used.

LLZT powder: $Li_{6.6}La_3Zr_{1.6}Ta_{0.4}O_{12}$ manufactured by Toshima Manufacturing Co., Ltd.
LATP powder: LICGC PW-01 Powder manufactured by Ohara Corporation

[Method for Preparing Electrolyte Composition]

(Example 1)

The polymer having the ability to preferentially conduct metal ions produced as described above was mixed with an organic solvent (ethylene carbonate:propylene carbonate = 1:1 (volume ratio)) (Kishida Chemical Co., Ltd.), thereby preparing a gel-like polymer composition. Next, a gel-like polymer composition and LLZT powder were mixed using a mortar so that a content of LLZT in the electrolyte composition was 77 mass%, and 150 mg of the mixture was press-molded at a pressure of 200 MPa, thereby obtaining an electrolyte composition having a diameter of 1.5 cm. Note that, as the LLZT powder, a powder obtained by dispersing the LLZT powder in 2 mass% of hydrochloric acid for 30 seconds before mixing the LLZT powder with the polymer composition, filtering the resulting dispersion, and drying the filtered dispersion was used.

(Example 2)

The gel-like polymer composition and LATP powder were mixed so that a content of LATP in the electrolyte composition was 70 mass%, and 150 mg of the mixture was press-molded at a pressure of 200 MPa, thereby obtaining an electrolyte composition having a diameter of 1.5 cm.

(Example 3)

A pellet molded body having a diameter of 1.5 cm was obtained by mixing the polymer having the ability to preferentially conduct metal ions, produced as described above, in an amount of 16 mass%, LATP powder in an amount of 79 mass%, and polytetrafluoroethylene (PTFE) in an amount of 5 mass%, and press-molding 150 mg of the mixture at a pressure of 200 MPa. An electrolyte composition was obtained by impregnating the pellet molded body with 32 mass% of an organic solvent (ethylene carbonate:propylene carbonate = 1:1 (volume ratio)) (Kishida Chemical Co., Ltd.) based on 100 mass% of the pellet molded body.

(Comparative Example 1)

As an electrolyte composition of Comparative Example 1, pellets having a diameter of 1.5 cm obtained by press-molding 150 mg of LLZT powder at a pressure of 200 MPa were used.

(Comparative Example 2)

As an electrolyte composition of Comparative Example 2, pellets having a diameter of 1.5 cm obtained by press-molding 150 mg of LATP powder at a pressure of 200 MPa were used.

(Comparative Example 3)

A mixture of poly(ethylene oxide) (average Mv 600,000, powder) manufactured by Aldrich and lithium bisfluorosulfonylimide (LiFSI) (molar ratio of O atoms:Li atoms = 20:1) was mixed with an organic solvent (ethylene carbonate:propylene carbonate = 1:1 (volume ratio)) (Kishida Chemical Co., Ltd.), thereby preparing a gel-like polymer composition. Next, a gel-like polymer composition and LLZT powder were mixed using a mortar so that a content of LLZT in the electrolyte composition was 58 mass%, and 150 mg of the mixture was press-molded at a pressure of 200 MPa, thereby obtaining an electrolyte composition having a diameter of 1.5 cm.

(Comparative Example 4)

The gel-like polymer composition and LATP powder were mixed so that a content of LATP in the electrolyte composition was 70 mass%, and 150 mg of the mixture was press-molded at a pressure of 200 MPa, thereby obtaining an electrolyte composition having a diameter of 1.5 cm.

For the obtained electrolyte composition, an ionic conductivity, a direct current density, a lithium ion transport number ($Li^+$ transport number), a cycle maintenance rate, and a decomposition voltage were measured as follows. The results are shown in Tables 1 and 2.

<Measurement of Ionic Conductivity>

An evaluation cell of a coin-type battery CR2032 was assembled in a dry argon atmosphere in a glove box. Specifically, the respective layers were laminated in the following order in the evaluation cell to prepare a test laminate.

(Stainless Steel Plate/Electrolyte Composition/Stainless Steel Plate)

An impedance is measured using an impedance measuring device under conditions of 25°C, a frequency range of 0.1 Hz to 1 MHz, and an applied voltage of 10 mV (vs. open-circuit voltage). An ionic conductivity σ can be calculated by the following formula.

$$\sigma(S\cdot cm^{-1}) = t(cm)/(R(\Omega) \times A(cm^2))$$

In the formula, R represents a value of impedance. A represents an area of the sample. t represents a thickness of

the sample.

<Measurement of Maximum Direct Current Density>

An evaluation cell of a coin-type battery CR2032 was assembled in a dry argon atmosphere in a glove box. Specifically, the respective layers were laminated in the following order in the evaluation cell to prepare a test laminate.

(Lithium/electrolyte composition/lithium)

The evaluation cell was subjected to a constant current test in which current densities of 10, 20, 30, 40, 50, 100, 200, 300, and 400 $\mu A/cm^2$ were applied alternately in the positive and negative directions for 10 cycles each, and the point at which the voltage reached 2 V was defined as a maximum direct current density.

<Measurement of Lithium Ion Transport Number>

An evaluation cell of a coin-type lithium battery CR2032 was assembled in a dry argon atmosphere in a glove box. Specifically, the respective layers were laminated in the following order in the evaluation cell to prepare a test laminate.

(Lithium/electrolyte composition/lithium)

The lithium ion transport number measurement method is introduced in Polymer, 28, 2324 (1987). That is, at room temperature (25°C), 10 mV was applied to a test laminate, an initial current value ($I_0$) and a steady current value ($I_{ss}$) were measured, and an interface resistance measurement value $R_0$ before voltage application and an interface resistance measurement value $R_{SS}$ after voltage application were obtained by a complex impedance method. Then, the obtained value was introduced into the following formula and a lithium ion transference number ($t_{Li+}$) was determined. V in the formula is the applied voltage.

$$t_{Li+} = I_{ss}(V - I_0R_0)/I_0(V - I_{SS}R_{SS})$$

<Measurement of Cycle Maintenance Rate>

In a glove box, under a dry argon atmosphere, an evaluation cell of a coin-type battery CR2032 was assembled using a positive electrode using $LiNi_{1/3}Co_{1/3}Mn_{1/3}O_2$ as a positive electrode active material. Specifically, the respective layers were laminated in the following order in the evaluation cell to prepare a test laminate.

(Positive Electrode/Electrolyte Composition/Lithium)

By performing charge and discharge measurement in the range of 2.5 to 4.3 V (vs. $Li/Li^+$) using the evaluation cell for 10 cycles, a cycle maintenance rate after 10 cycles was measured.
FIG. 1 shows the results of the charge-discharge test of Example 2. In addition, FIG. 2 shows the results of the charge-discharge test of Comparative Example 4. In FIGS. 1 and 2, the solid curve is a result at the first cycle, and the broken curve is a result at the 10th cycle.
In Example 2, the capacity retention rate after 10 cycles was 98%. On the other hand, in Comparative Example 4, the capacity retention rate after 10 cycles was 9%.

<Measurement of Decomposition Potential>

Using the cell used for measuring the cycle characteristics, the rise of peaks other than charge was measured in a differential capacity curve.
FIG. 3 is a differential capacity curve of Example 2. In addition, FIG. 4 is a differential capacity curve for Comparative Example 4. Each of the differential capacity curves of FIGS. 3 and 4 is obtained by regarding the capacity on the charge side of the charge/discharge curve of the third cycle as a function of the voltage and differentiating the capacity with respect to the capacity.
FIG. 3 is the differential capacity curve of Example 2. In addition, FIG. 4 is the differential capacity curve of Comparative Example 4. In Example 2, no peak other than charge was observed in a range of 2.5 to 4.3 V used in the cycle maintenance rate measurement. In the differential capacity curve obtained by performing charge up to 5.0 V, since the voltage at the start of charge was around 4.0 V, it was confirmed that no decomposition reaction occurred at a potential

lower than the voltage, and a new peak rising at 4.5 V was obtained. From the above, the decomposition potential of the electrolyte was estimated to be 4.5 V.

On the other hand, in Comparative Example 4, although it seemed that a single peak was obtained at a glance, the position at which the peak rose was shifted to a lower potential side even though the same positive electrode material was used, and the peak width increased. Therefore, it was determined that a peak due to the decomposition of the component occurred, and the decomposition potential of the electrolyte was estimated to be 3.8 V. This is consistent with the previously reported decomposition potential of PEO.

[Table 1]

| | Comparative Example 1 | Comparative Example 2 | Example 1 | Example 2 | Example 3 |
|---|---|---|---|---|---|
| Ionic conductivity (S/cm) | $\approx 10^{-8}$ | $\approx 10^{-8}$ | $1.1 \times 10^{-4}$ | $4.0 \times 10^{-4}$ | $3.6 \times 10^{-4}$ |
| Maximum direct current density ($\mu A/cm^2$) | < 10 | < 10 | 100 | 300 | 900 |

[Table 2]

| | Comparative Example 3 | Comparative Example 4 | Example 1 | Example 2 |
|---|---|---|---|---|
| Li+ transport number (-) | 0.12 | 0.12 | 0.78 | 0.90 |
| Decomposition potential (V) | 3.8 | 3.8 | - | 4.5 |

<Measurement of Dynamic Hardness>

Mechanical properties of the electrolyte composition were measured using a nanoindenter DUH-211 manufactured by Shimadzu Corporation. The dynamic hardness was calculated as follows from the value of a test force F when the indentation depth h was 3 $\mu$m. The same measurement was performed at five discontinuous points per sample, and an average value was calculated. The results are shown in Table 3. Note that the test was performed at 25°C.

Dynamic hardness DH ($N/mm^2$)

$$DH = \alpha \times F/h^2 \times 10^3$$

$\alpha$ = 3.8584: constant depending on indenter shape

F: test force (mN)

h: indentation depth.

[Table 3]

| | Example 2 LATP/polymer/ECPC | Comparative Example 2 LATP/polymer/ECPC |
|---|---|---|
| | 70/10/20 (mass ratio) | 100/0/0 (mass ratio) |
| Ionic conductivity (S/cm) | $4.0 \times 10^{-4}$ | $\approx 10^{-8}$ |
| Dynamic hardness ($N/mm^2$) | $5.0 \times 10^2$ | $7.2 \times 10^3$ |

## Claims

1. An electrolyte composition comprising:

an ion conductive inorganic solid electrolyte;

a polymer having an ability to preferentially conduct metal ions; and
an organic solvent,
wherein the electrolyte composition satisfies at least one of the following conditions: (1) a content of the ion conductive inorganic solid electrolyte is 50 mass% or more with respect to a total amount of the electrolyte composition; and (2) a content of the ion conductive inorganic solid electrolyte is 15 vol% or more with respect to the total amount of the electrolyte composition.

**2.** The electrolyte composition according to claim 1, wherein the ion conductive inorganic solid electrolyte is an oxide, a sulfide, a hydride, or a halide, and contains at least one of an alkali metal element and an alkaline earth metal element.

**3.** The electrolyte composition according to claim 2, wherein the ion conductive inorganic solid electrolyte is a perovskite-type oxide, a NASICON-type oxide, a LISICON-type oxide, or a garnet-type oxide.

**4.** The electrolyte composition according to claim 1 or 2, wherein the polymer contains at least one of an anionic functional group having a metal ion as a counter cation and a functional group having an anion scavenging ability.

**5.** The electrolyte composition according to claim 1 or 2, wherein a transport number of metal ions is 0.4 or more.

**6.** The electrolyte composition according to claim 1 or 2, wherein an oxidation potential is 4.0 V or more with respect to $Li/Li^+$.

**7.** An electrolyte comprising the electrolyte composition according to claim 1 or 2.

**8.** A battery comprising the electrolyte composition according to claim 1 or 2.

Fig.1

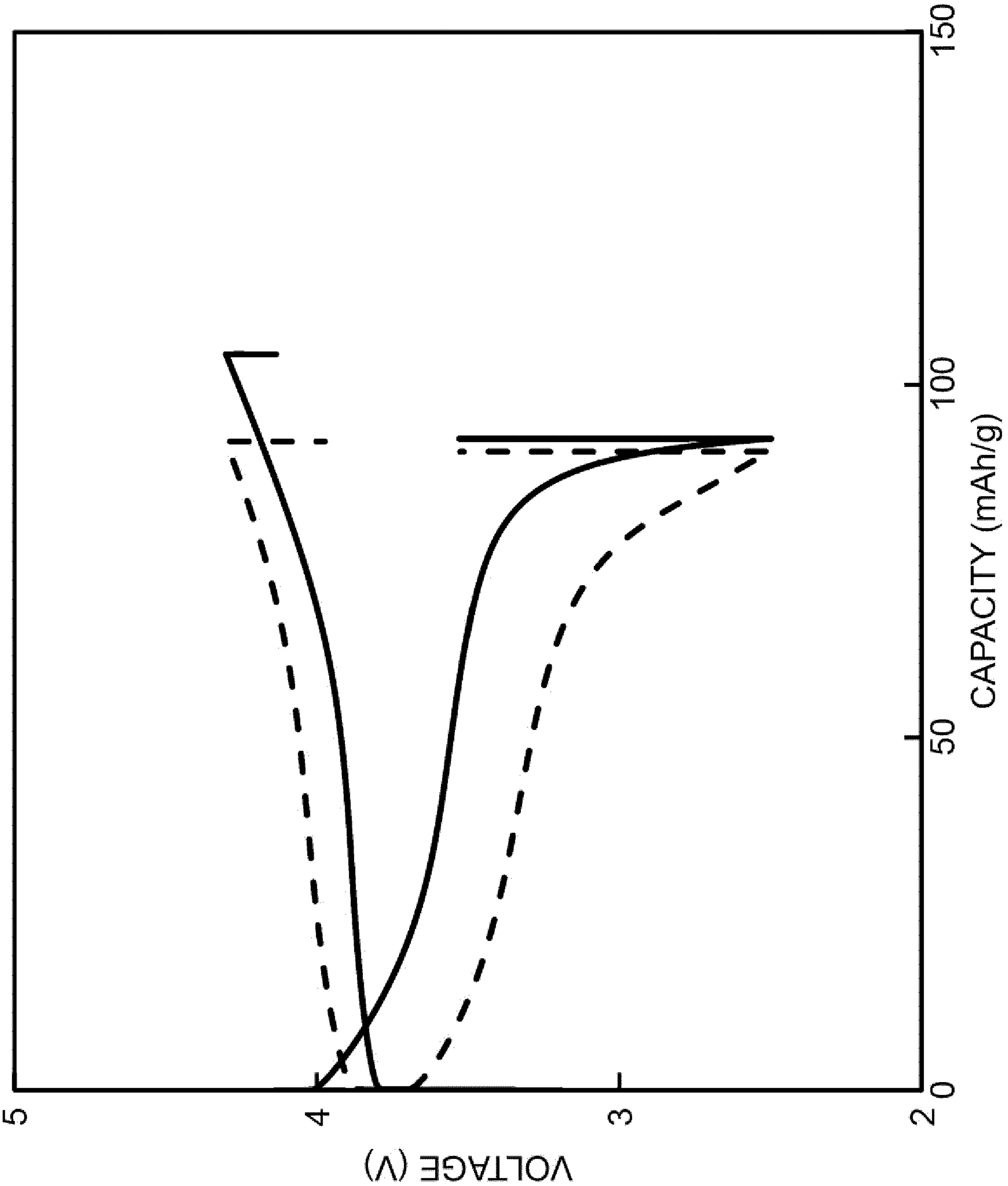

Fig.2

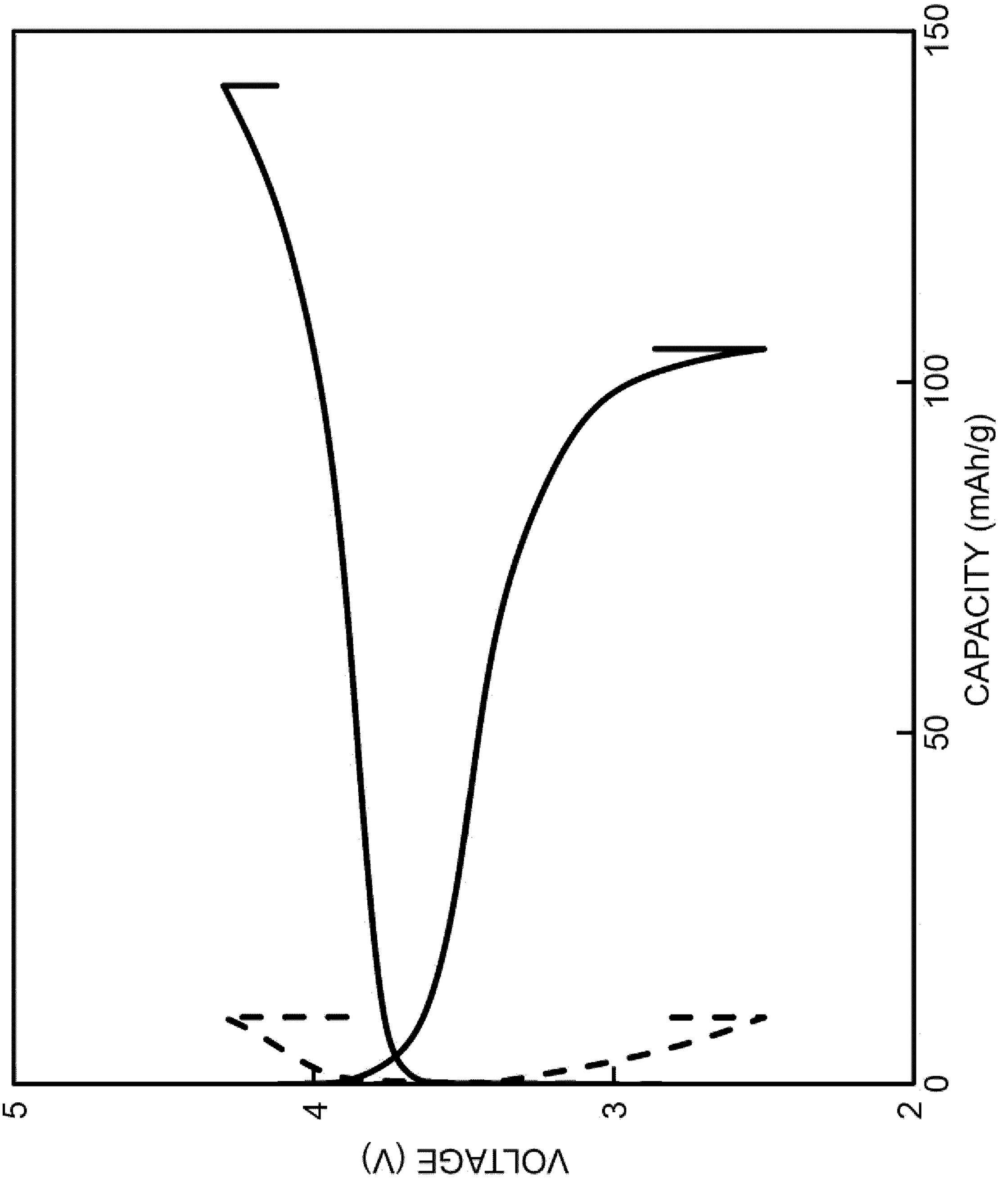

Fig.3

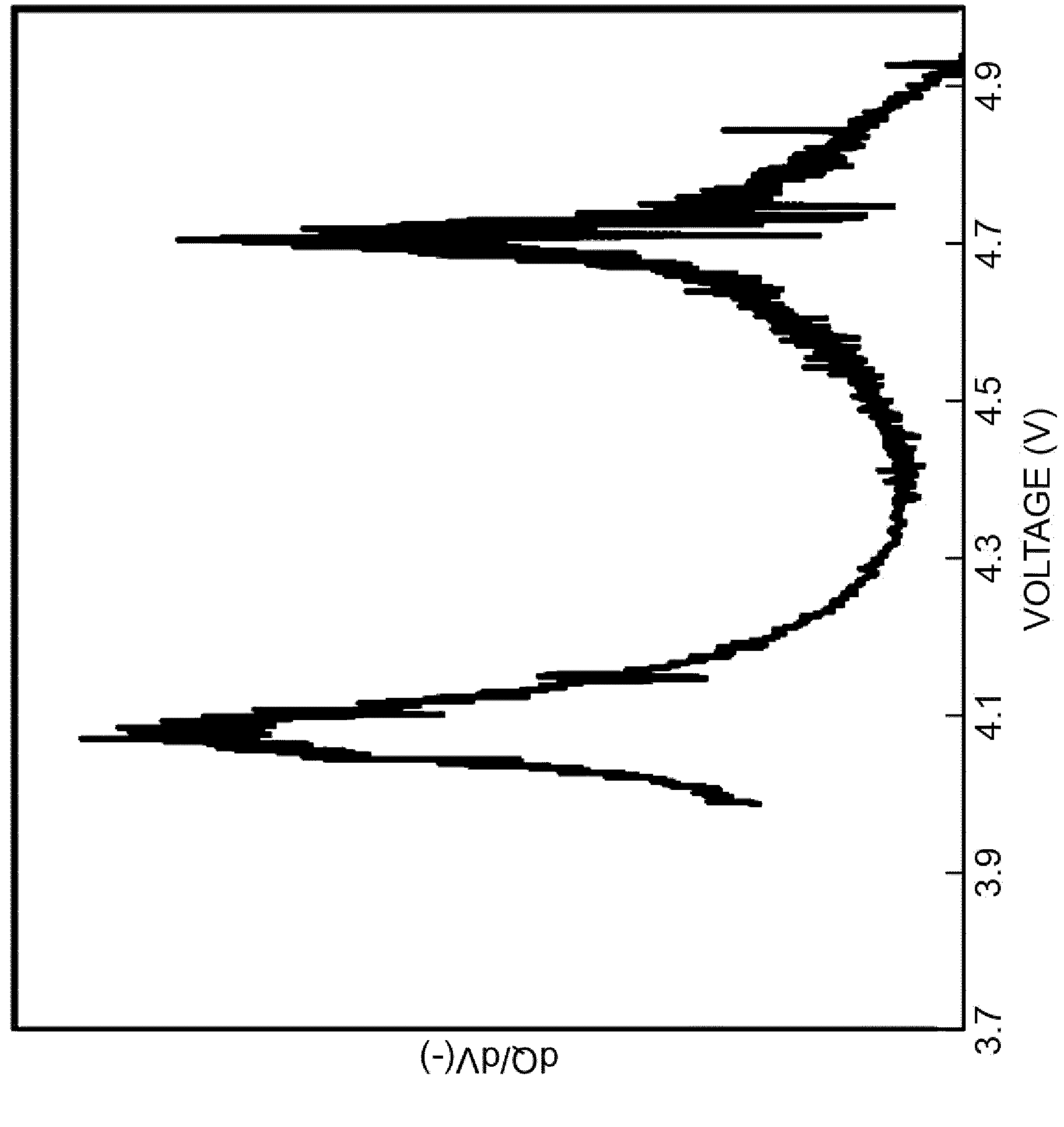

*Fig.4*

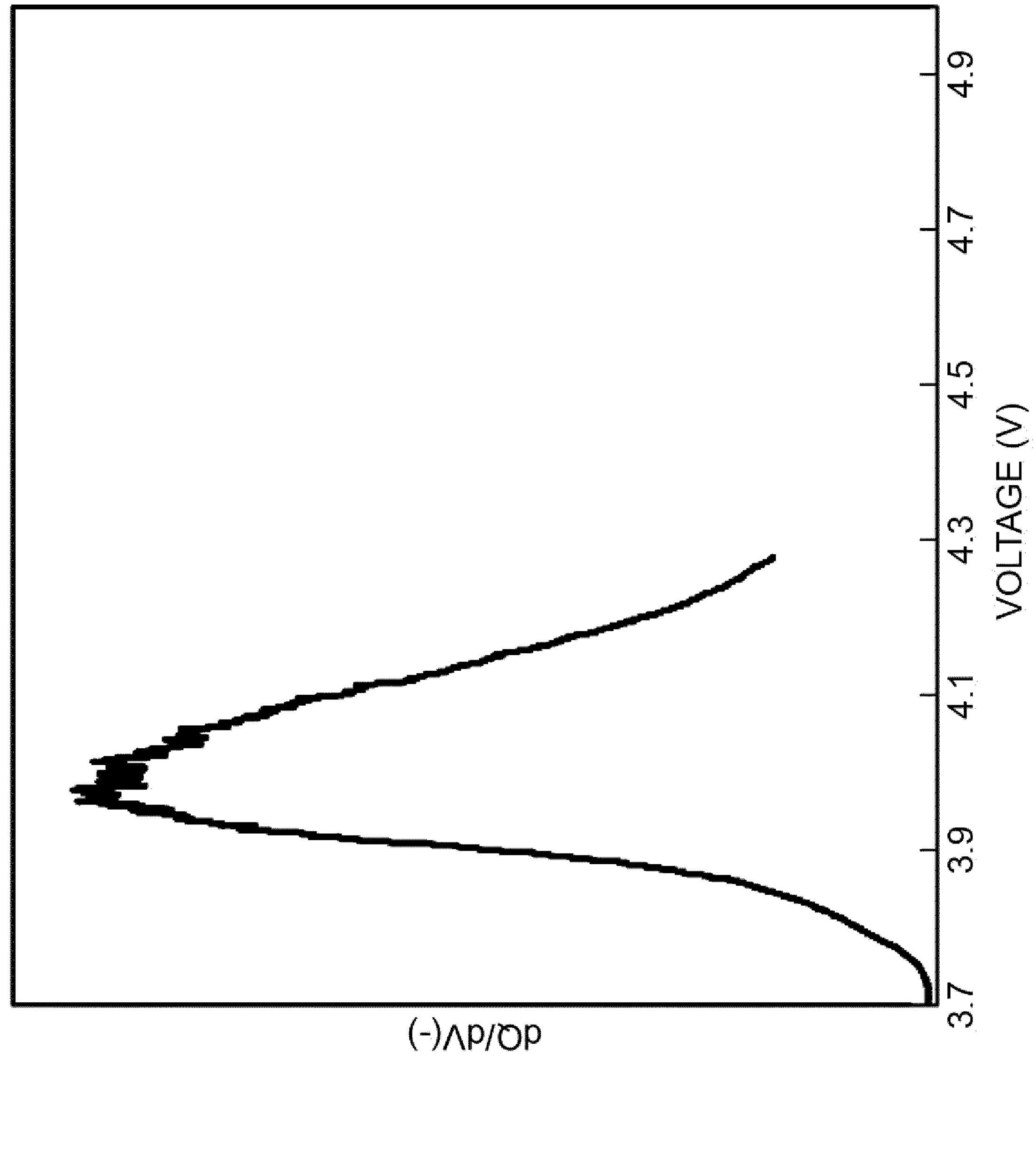

**INTERNATIONAL SEARCH REPORT**

International application No.
**PCT/JP2023/034519**

**A. CLASSIFICATION OF SUBJECT MATTER**

***H01M 10/056***(2010.01)i; ***H01B 1/06***(2006.01)i; ***H01B 1/08***(2006.01)i; ***H01B 1/10***(2006.01)i; ***H01G 11/56***(2013.01)i; ***H01M 10/052***(2010.01)i; ***H01M 10/054***(2010.01)i; ***H01M 10/0562***(2010.01)i; ***H01M 10/0565***(2010.01)i; ***H01M 10/0569***(2010.01)i
FI: H01M10/056; H01M10/0562; H01M10/0565; H01M10/0569; H01M10/052; H01B1/06 A; H01B1/08; H01B1/10; H01G11/56; H01M10/054

According to International Patent Classification (IPC) or to both national classification and IPC

**B. FIELDS SEARCHED**

Minimum documentation searched (classification system followed by classification symbols)

H01M10/056; H01B1/06; H01B1/08; H01B1/10; H01G11/56; H01M10/052; H01M10/054; H01M10/0562; H01M10/0565; H01M10/0569

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/146137 A1 (PIOTREK CO., LTD.) 01 August 2019 (2019-08-01) claims 1-4, example 1 | 1-4, 7-8 |
| X | JP 2019-505074 A (KOREA INSTITUTE OF INDUSTRIAL TECHNOLOGY) 21 February 2019 (2019-02-21) claims 1-9, production example 3, test example 6, fig. 1 | 1-3, 6-8 |
| X | WO 2021/153593 A1 (SUMITOMO CHEMICAL COMPANY, LIMITED) 05 August 2021 (2021-08-05) claims 1-6, example 2 | 1-3, 7-8 |
| X | WO 2021/080005 A1 (NGK SPARK PLUG CO., LTD.) 29 April 2021 (2021-04-29) claims 1-6, fig. 4 | 1-3, 7-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No. **PCT/JP2023/034519**

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-515893 A (THE UNIVERSITY OF NORTH CAROLINA AT CHAPEL HILL) 14 June 2018 (2018-06-14) claim 1, examples 1-4 | 1-2, 5, 7-8 |

Form PCT/ISA/210 (second sheet) (January 2015)

**INTERNATIONAL SEARCH REPORT**
**Information on patent family members**

International application No.
**PCT/JP2023/034519**

| Patent document cited in search report | Publication date (day/month/year) | Patent family member(s) | Publication date (day/month/year) |
|---|---|---|---|
| WO 2019/146137 A1 | 01 August 2019 | US 2020/0350616 A1<br>claims 1-4, example 1<br>EP 3745517 A1 | |
| JP 2019-505074 A | 21 February 2019 | US 2019/0051934 A1<br>claims 1-9, production example 3, test example 6, fig. 1<br>WO 2017/135553 A1 | |
| WO 2021/153593 A1 | 05 August 2021 | US 2023/0145927 A1<br>claims 1-6, example 2<br>EP 4099458 A1 | |
| WO 2021/080005 A1 | 29 April 2021 | US 2022/0384842 A1<br>claims 1-6, fig. 4<br>EP 4049974 A1 | |
| JP 2018-515893 A | 14 June 2018 | US 2017/0141430 A1<br>claim 1, examples 1-4<br>WO 2016/187448 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 112448100
- CN 110247111
- US 6022643 A
- US 5705689 A
- US 6120941 A


### Non-patent literature cited in the description


- *Journal of The Electrochemical Society*, 2020, vol. 167, 070559
- *Polymer*, 1987, vol. 28, 2324